# EUROPÄISCHE PATENTSCHRIFT

(11) **EP 2 957 739 B1**
(45) Veröffentlichungstag und Bekanntmachung des Hinweises auf die Patenterteilung: **17.08.2016**
(21) Anmeldenummer: 15173676.6
(22) Anmeldetag: 13.05.2014
(51) Int. Cl.: F01N 3/24, F01N 3/28, F01N 13/18, F01N 13/00, F01N 3/20, F01N 3/035

(54) **ABGASANLAGE EINER BRENNKRAFTMASCHINE**
EXHAUST GAS UNIT FOR AN INTERNAL COMBUSTION ENGINE
SYSTÈME D'ÉCHAPPEMENT D'UN MOTEUR À COMBUSTION INTERNE

(30) Priorität: 10.06.2013 DE 102013210799
(43) Veröffentlichungstag der Anmeldung: 23.12.2015
(62) Teilanmeldung aus: 14168142.9
(73) Patentinhaber: Eberspächer Exhaust Technology GmbH & Co. KG, 66539 Neunkirchen (DE)
(72) Erfinder: Hackländer, Felix, 73728 Esslingen (DE)
(74) Vertreter: BRP Renaud & Partner mbB Rechtsanwälte Patentanwälte Steuerberater

(56) Entgegenhaltungen:
- WO-A1-01/04466
- DE-U1-202006 011 281
- GB-A- 2 454 276
- US-A1- 2003 108 457
- US-A1- 2008 066 451
- US-A1- 2011 219 755

## Beschreibung

Die vorliegende Erfindung betrifft eine Abgasanlage für eine Brennkraftmaschine mit den Merkmalen des Oberbegriffs des Anspruchs 1.

Moderne Abgasanlagen für Brennkraftmaschinen führen relativ komplexe Abgasnachbehandlungen durch, wobei unterschiedliche Abgasnachbehandlungseinrichtungen zum Einsatz kommen. Beispielsweise kommt ein Oxidationskatalysator zum Einsatz, um unverbrannte Kohlenwasserstoffe mit Restsauerstoff umzusetzen. Ebenso kann darin Kohlenmonoxid in Kohlendioxid umgesetzt werden. Ferner kann, insbesondere bei einem Dieselmotor, ein Partikelfilter vorgesehen sein, um im Abgas mitgeführte Partikel, insbesondere Ruß, herauszufiltern. Des Weiteren kann ein SCR-System vorgesehen sein, vorzugsweise bei einem Dieselmotor, wobei SCR für Selective Catalytic Reduction steht. Ein derartiges SCR-System umfasst üblicherweise einen Injektor zum Eindüsen eines Reduktionsmittels sowie einen SCR-Katalysator. Als Reduktionsmittel kommt üblicherweise Ammoniak bzw. eine wässrige Harnstofflösung zum Einsatz. Mittels Thermolyse und Hydrolyse kann aus wässrigem Harnstoff Ammoniak generiert werden, das im SCR-Katalysator zur Reduktion von Stickoxiden zu Stickstoff und Kohlendioxid genutzt werden kann. Damit das üblicherweise in flüssiger Form in den Abgasstrom eingespritzte Reduktionsmittel bis zum SCR-Katalysator verdampfen und sich mit dem Abgas durchmischen kann, ist eine gewisse Mischstrecke erforderlich. Um die Verdampfung und/oder Durchmischung zu verbessern und um eine derartige Mischstrecke zu verkürzen, kann ein statischer Mischer-Verdampfer zum Einsatz kommen, der zwischen dem Injektor und dem SCR-Katalysator anzuordnen ist. Ein derartiger Mischer-Verdampfer unterscheidet sich von einem herkömmlichen statischen Mischer dadurch, dass die Leitflächen oder Leitschaufeln des Mischer-Verdampfers gleichzeitig dazu genutzt werden, darauf auftreffendes flüssiges Reduktionsmittel zu verdampfen. Insbesondere kann ein derartiger Mischer-Verdampfer in seiner Durchströmungsrichtung weitgehend blickdicht ausgestaltet sein, so dass in der Strömung mitgeführte Tröpfchen zwangsläufig auf die Leitschaufeln treffen und daran verdampfen können. Bei einem SCR-System, das mit einem flüssigen Reduktionsmittel arbeitet, ist ein derartiger Mischer-Verdampfer folglich immer stromab eines Injektors anzuordnen, der zum Einspritzen des flüssigen Reduktionsmittels vorgesehen ist.

Bei Fahrzeuganwendungen ergibt sich außerdem als generelles Problem, dass nur vergleichsweise wenig Bauraum zur Unterbringung der Abgasanlage zur Verfügung steht.

Eine gattungsgemäße Abgasanlage ist aus der US 2011/0219755 A1 bekannt. Sie umfasst einen Oxidationskatalysator, ein Partikelfilter, einen Injektor zum Eindüsen eines Reduktionsmittels, einen statischen Mischer-Verdampfer, einen SCR-Katalysator und ein Gehäuse. Dieses Gehäuse weist einen zentrisch angeordneten Innenkanal, einen konzentrisch um den Innenkanal angeordneten Ringkanal, einen exzentrisch angeordneten Außenkanal, eine den Außenkanal mit dem Ringkanal verbindende erste Umlenkkammer und eine den Innenkanal mit dem Ringkanal verbindende zweite Umlenkkammer auf. Der Oxidationskatalysator ist stromauf des Partikelfilters und stromauf des SCR-Katalysators angeordnet. Der Injektor ist stromauf des Mischer-Verdampfers angeordnet. Der Mischer-Verdampfer ist stromauf des SCR-Katalysators angeordnet. Der Mischer-Verdampfer befindet sich im Innenkanal. Bei der bekannten Abgasanlage ist der Oxidationskatalysator ringförmig ausgestaltet und im Ringkanal angeordnet. Ferner ist der SCR-Katalysator in einem zusätzlichen Gehäuseabschnitt angeordnet, der an einer von der zweiten Umlenkkammer abgewandten Seite der ersten Umlenkkammer an das übrige Gehäuse anschließt. Des Weiteren ist der Mischer-Verdampfer funktionell in das im Innenkanal angeordnete Partikelfilter integriert.

Außerdem ist der Injektor an der zweiten Umlenkkammer angeordnet, so dass er das Reduktionsmittel in die zweite Umlenkkammer eindüsen kann. Schließlich befindet sich ein Gehäuseeinlass am Außenkanal.

Die vorliegende Erfindung beschäftigt sich mit dem Problem, für eine Abgasanlage der eingangs genannten Art eine verbesserte Ausführungsform anzugeben, die sich insbesondere durch eine kompakte Bauform auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zur Unterbringung mehrerer Komponenten der Abgasanlage ein gemeinsames Gehäuse vorzusehen, das einen zentrisch angeordneten Innenkanal, einen konzentrisch um den Innenkanal angeordneten Ringkanal und einen exzentrisch und außerhalb des Ringkanals angeordneten Außenkanal umfasst. Das Gehäuse besitzt außerdem eine den Außenkanal mit dem Ringkanal verbindende erste Umlenkkammer und eine den Innenkanal mit dem Ringkanal verbindende zweite Umlenkkammer. Der zuvor genannte statische Mischer-Verdampfer kann nun im Innenkanal angeordnet werden, während im Ringkanal der Oxidationskatalysator oder das Partikelfilter und/oder der SCR-Katalysator angeordnet sein können, wozu der Oxidationskatalysator bzw. das Partikelfilter bzw. der SCR-Katalysator ringförmig ausgestaltet sind. Die übrigen Komponenten werden innerhalb der Abgasanlage so angeordnet, dass sich der Oxidationskatalysator stromauf des Partikelfilters und stromauf des SCR-Katalysators befindet. Ferner befindet sich der Injektor bzw. seine Eindüsstelle stromauf des Mischer-Verdampfers, während der Mischer-Verdampfer stromauf des SCR-Katalysators angeordnet ist. Durch die vorgeschlagene Bauweise ergibt sich eine extrem kompakte Anordnung mehrerer Komponenten der Abgasanlage innerhalb des gemeinsamen Gehäuses. Durch die Strömungsumlenkungen innerhalb der beiden Umlenkkammern wird außerdem für die Abgasanlage eine extrem kurze Bauweise erreicht, da durch die Umlenkungen innerhalb des gemeinsamen Gehäuses eine vergleichsweise lange Strömungsstrecke realisierbar ist, in der zumindest der Mischer-Verdampfer und der Oxidationskatalysator bzw. das Partikelfilter angeordnet sind.

Entsprechend einer nicht erfindungsgemäßen Ausführungsform kann ein Gehäuseeinlass am Außenkanal ausgebildet sein, während der Injektor in diesem Fall koaxial zum Innenkanal an der zweiten Umlenkkammer angeordnet ist. Die Durchströmung des Gehäuses erfolgt somit von außen nach innen, so dass also das Abgas im Betrieb der Abgasanlage durch den Außenkanal in die erste Umlenkkammer eintritt, von dieser über den Ringkanal zur zweiten Umlenkkammer gelangt und von dieser in den Innenkanal strömt.

Bei einer anderen nicht erfindungsgemäßen Ausführungsform kann der Oxidationskatalysator im Ringkanal angeordnet sein, während der Mischer-Verdampfer stromauf des Partikelfilters angeordnet ist und der Injektor das Reduktionsmittel in die zweite Umlenkkammer eindüst. Die Eindüsung des Reduktionsmittels in die zweite Umlenkkammer ist dabei von Vorteil, da in der Umlenkkammer ohnehin eine intensive Strömungsumlenkung stattfindet, was eine Durchmischung zwischen Reduktionsmittel und Abgas unterstützt. Ferner ist es dadurch möglich, den Mischer-Verdampfer unmittelbar am Einlass des Innenkanals anzuordnen, so dass stromab des Mischer-Verdampfers weiterer Raum im Innenkanal zur Verfügung steht. Dieser Raum kann als Mischstrecke genutzt werden. Ebenso lässt sich dieser Raum zur Unterbringung des SCR-Katalysators oder des Partikelfilters nutzen. Denkbar ist auch eine Integration der SCR-Katalysatorfunktion in das Partikelfilter, indem ein Substrat des Partikelfilters mit einer entsprechenden SCR-Katalysatorbeschichtung versehen wird.

Dementsprechend kann gemäß einer nicht erfindungsgemäßen Weiterbildung das Partikelfilter stromab des Mischer-Verdampfers im Innenkanal angeordnet sein. Alternativ kann der SCR-Katalysator stromab des Mischer-Verdampfers im Innenkanal angeordnet sein. Wie erwähnt kann auch ein Partikelfilter mit SCR-Katalysatorbeschichtung stromab des Mischer-Verdampfers im Innenkanal angeordnet sein.

Des Weiteren kann bei einer nicht erfindungsgemäßen Ausführungsform das Partikelfilter stromab des Innenkanals außerhalb des Gehäuses in einem separaten Partikelfiltergehäuse angeordnet sein. Analog dazu kann der SCR-Katalysator stromab des Innenkanals außerhalb des Gehäuses in einem separaten SCR-Katalysator-Gehäuse angeordnet sein. Ebenso ist auch hier eine Ausführungsform möglich, bei welcher ein Partikelfilter, das mit einer SCR-Katalysatorbeschichtung ausgestattet ist, stromab des Innenkanals außerhalb des Gehäuses in einem separaten Gehäuse angeordnet ist.

Bei der Erfindung ist ein Gehäuseeinlass am Innenkanal ausgebildet sein, während der Injektor am Innenkanal angeordnet ist. Bei dieser erfindungsgemäßen Ausgestaltung ergibt sich eine Durchströmung des gemeinsamen Gehäuses von innen nach außen, so dass also das Abgas im Betrieb der Abgasanlage über den Gehäuseeinlass in den Innenkanal eintritt, von dort in die zweite Umlenkkammer gelangt und durch den Ringkanal in die erste Umlenkkammer geführt ist, so dass das Abgas schließlich über den Außenkanal abgeführt werden kann. Auch die erfindungsgemäße Ausführungsform baut vergleichsweise kompakt.

Zusätzlich kann nun gemäß einer Ausführungsform vorgesehen sein, dass das Partikelfilter und/oder der SCR-Katalysator im Ringkanal angeordnet ist/sind, während der Mischer-Verdampfer stromauf des Partikelfilters bzw. des SCR-Katalysators angeordnet ist und der Injektor das Reduktionsmittel in den Innenkanal eindüst. Auch hier ist wieder denkbar, dass im Ringkanal entweder das Partikelfilter oder der SCR-Katalysator oder ein mit einer SCR-Katalysatorbeschichtung versehenes Partikelfilter angeordnet wird, um hier eine möglichst kompakte Bauform zu realisieren.

Entsprechend einer vorteilhaften Weiterbildung kann der Oxidationskatalysator stromauf des Innenkanals außerhalb des Gehäuses in einem separaten Oxidatorgehäuse angeordnet sein.

Bei einer anderen vorteilhaften Ausführungsform kann der Mischer-Verdampfer strömungsmäßig zwischen dem Oxidationskatalysator und dem Partikelfilter bzw. zwischen dem Oxidationskatalysator und dem SCR-Katalysator angeordnet sein. Auch hier ist wieder eine Ausführungsform denkbar, bei der ein Partikelfilter verwendet wird, das eine SCR-Katalysatorbeschichtung aufweist.

Gemäß einer anderen Ausführungsform kann der Injektor das Reduktionsmittel strömungsmäßig zwischen dem Oxidationskatalysator und dem Partikelfilter eindüsen. In diesem Fall ist zweckmäßig vorgesehen, dass der SCR-Katalysator separat zum Partikelfilter vorgesehen ist und dabei stromab des Partikelfilters innerhalb oder außerhalb des gemeinsamen Gehäuses angeordnet ist. In diesem Fall wird somit das Partikelfilter zur Realisierung einer Mischstrecke bzw. zur Realisierung einer intensiven Durchmischung von Reduktionsmittel und Abgas genutzt.

Entsprechend einer zweckmäßigen Ausführungsform kann in der ersten Umlenkkammer eine Strömungsumlenkung um bis zu 180°, vorzugsweise um etwa 180° erfolgen. Bei einer anderen vorteilhaften Ausführungsform kann in der zweiten Umlenkkammer eine Strömungsumlenkung um bis zu 180°, vorzugsweise um etwa 180° erfolgen. Besonders zweckmäßig ist eine Ausgestaltung, bei welcher ein Gehäuseeinlass und ein Gehäuseauslass parallele Durchströmungsrichtungen definieren. In diesem Fall wird in Verbindung mit der zweifachen Strömungsumlenkung um etwa 180° erreicht, dass das Abgas in derselben Richtung aus dem Gehäuse austritt, wie es in das Gehäuse eintritt. Durch die Strömungsumlenkung(en) kann eine relativ kompakte Bauform für das Gehäuse realisiert werden. Zur Realisierung des hier vorgestellten gemeinsamen Gehäuses kann der Ringkanal radial zwischen einem Innenrohr und einem Topf verlaufen, wobei das Innenrohr koaxial in den Topf hineinragt. Der Innenkanal verläuft dann im Innenrohr, während der Außenkanal in einem separaten Außenrohr verläuft, das an einer Außenseite des Topfs bzw. außerhalb des Topfs angeordnet ist. Zweckmäßig kann bei einer derartigen Ausführungsform gemäß einer Weiterbildung die erste Umlenkkammer in einem Topfdeckel angeordnet sein, der den Topf mit dem Außenrohr verbindet. Im Unterschied dazu kann die zweite Umlenkkammer innerhalb des Topfs im Bereich eines Topfbodens angeordnet sein. Hierdurch ergibt sich für das gemeinsame Gehäuse ein einfach realisierbarer Aufbau, was den Aufwand zur Herstellung der Abgasanlage reduziert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1+2: jeweils einen stark vereinfachten Längsschnitt durch eine Abgasanlage, bei verschiedenen nicht erfindungsgemäßen Ausführungsformen,
- Fig. 3: einen stark vereinfachten Längsschnitt der Abgasanlage bei einer erfindungsgemäßen Ausführungsform,
- Fig. 4: eine isometrische Ansicht der Abgasanlage.

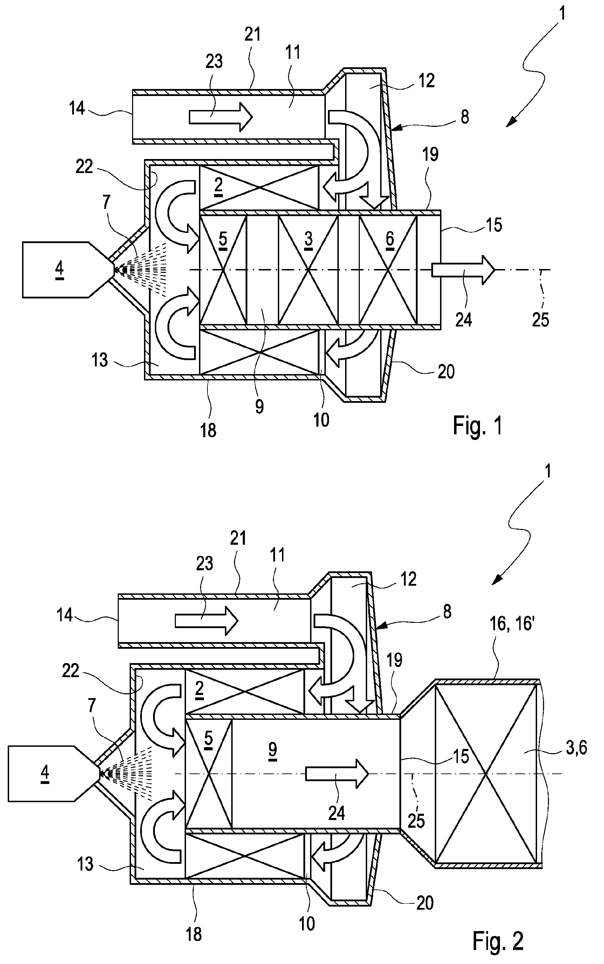

Entsprechend den Figuren 1 bis 3 umfasst eine Abgasanlage 1, die dazu dient, im Betrieb einer hier nicht gezeigten Brennkraftmaschine anfallendes Abgas abzuführen und einer Abgasnachbehandlung zu unterziehen, einen Oxidationskatalysator 2, ein Partikelfilter 3, einen Injektor 4, einen statischen Mischer-Verdampfer 5 und einen SCR-Katalysator 6. Der Injektor 4 dient zum Eindüsen eines Reduktionsmittels, wobei in den Figuren 1 bis 3 ein Einspritzstrahl 7 angedeutet ist.

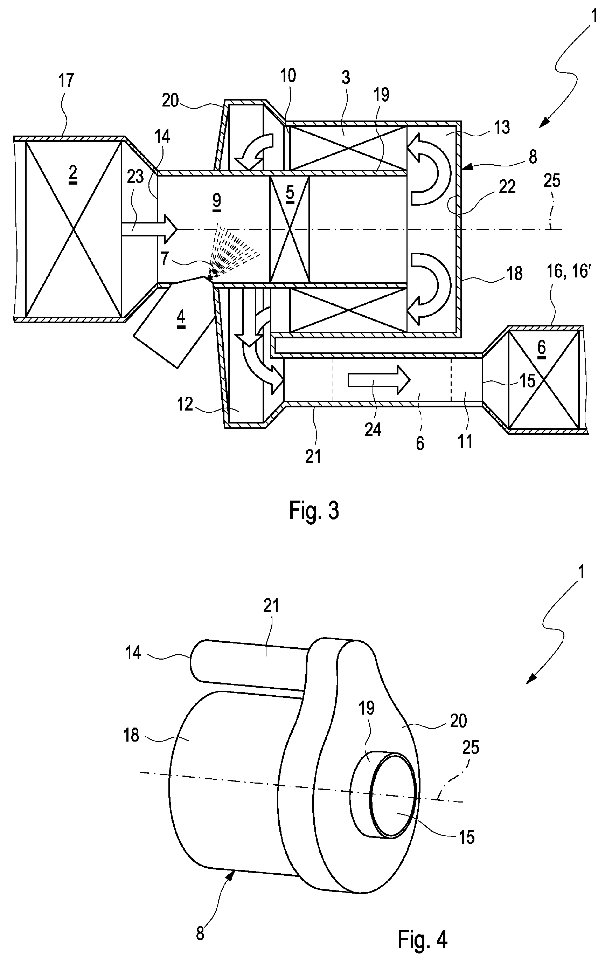

Die Abgasanlage 1 weist außerdem ein Gehäuse 8 auf, das im Folgenden auch als gemeinsames Gehäuse 8 oder als Hauptgehäuse 8 bezeichnet werden kann. Das Gehäuse 8 besitzt einen zentrisch angeordneten Innenkanal 9, einen konzentrisch um den Innenkanal 9 angeordneten Ringkanal 10 und einen bezüglich des Innenkanals 9 exzentrisch angeordneten Außenkanal 11. Ferner besitzt das Gehäuse 8 eine erste Umlenkkammer 12, die den Außenkanal 11 mit dem Ringkanal 10 verbindet, sowie eine zweite Umlenkkammer 13, die den Innenkanal 9 mit dem Ringkanal 10 verbindet. Dieses Gehäuse 8 ist nun dafür vorgesehen, mehrere Komponenten der Abgasanlage 1 aufzunehmen. Insbesondere ist dabei der Mischer-Verdampfer 5 bei allen hier gezeigten Ausführungsformen im Innenkanal 9 angeordnet. Ferner ist bei den Ausführungsformen der Figuren 1 und 2 der Oxidationskatalysator 2 im Ringkanal 10 angeordnet, wozu der Oxidationskatalysator 2 ringförmig ausgestaltet ist. Bei der in Figur 3 gezeigten Ausführungsform ist dagegen das Partikelfilter 3 ringförmig ausgestaltet und im Ringkanal 10 angeordnet. Des Weiteren sind die Komponenten der Abgasanlage 1 in einer bestimmten Relation zueinander positioniert. Insbesondere ist der Oxidationskatalysator 2 stets stromauf des Partikelfilters 3 und stromauf des SCR-Katalysators 6 angeordnet. Der Injektor 4 ist dagegen stromauf des Mischer-Verdampfers 5 und stromauf des SCR-Katalysators 6 angeordnet. Bei der in den Figuren 1 und 3 gezeigten Ausführungsform sind das Partikelfilter 3 und der SCR-Katalysator 6 als separate Elemente konzipiert. Im Unterschied dazu zeigt Figur 2 exemplarisch eine Ausführungsform, bei welcher die Funktionalität des SCR-Katalysators 6 in das Partikelfilter 3 integriert ist. Hierzu kann ein Substrat des Partikelfilters 3 mit einer katalytisch aktiven Beschichtung versehen sein, welche die SCR-Katalysatorfunktion erfüllt.

Die in Figur 1 gezeigte Anordnung von Partikelfilter 3 und SCR-Katalysator 6 kann auch umgekehrt sein, so dass sich der SCR-Katalysator 6 stromauf des Partikelfilters 3 befindet.

Das Gehäuse 8 besitzt einen Gehäuseeinlass 14 sowie einen Gehäuseauslass 15. Bei den in den Figuren 1 und 2 gezeigten Ausführungsformen ist der Gehäuseeinlass 14 am Außenkanal 11 ausgebildet, so dass das Abgas im Betrieb der Abgasanlage 1 bzw. im Betrieb der zugehörigen Brennkraftmaschine am Außenkanal 11 in das Gehäuse 8 eintritt. Der Gehäuseauslass 15 befindet sich dann am Innenkanal 9. Bei diesen Ausführungsformen ist der Injektor 4 koaxial zum Innenkanal 9 an der zweiten Umlenkkammer 13 angeordnet. Ferner ist hier der Oxidationskatalysator 2 im Ringkanal 10 angeordnet. Der Mischer-Verdampfer 5 befindet sich stromauf des SCR-Katalysators 6 sowie stromauf des Partikelfilters 3. Der Injektor 4 düst das Reduktionsmittel in die zweite Umlenkkammer 3 ein. Der Mischer-Verdampfer 5 ist am Eintritt des Innenkanals 9, also an einer der zweiten Umlenkkammer 13 zugewandten Stirnseite des Innenkanals 9 angeordnet.

Bei der in Figur 1 gezeigten Ausführungsform ist ferner vorgesehen, dass das Partikelfilter 3 stromab des Mischer-Verdampfers 5 im Innenkanal 9 angeordnet ist. Ferner ist hier außerdem der SCR-Katalysator 6 im Innenkanal 9, also stromauf des Gehäuseauslasses 15 angeordnet.

Im Unterschied dazu zeigt Figur 2 eine Ausführungsform, bei welcher das Partikelfilter 3 stromab des Innenkanals 9, also stromab des Gehäuseauslasses 15 in einem separaten Partikelfiltergehäuse 16 angeordnet ist. Alternativ kann auch der SCR-Katalysator 6 außerhalb des Gehäuses 8 in einem separaten SCR-Katalysatorgehäuse 16' angeordnet sein. Bei der in Figur 2 gezeigten Ausführungsform ist - wie gesagt - die SCR-Katalysatorfunktion in das Partikelfilter 3 integriert. Ebenso ist hier denkbar, zwei separate Elemente für das Partikelfilter 3 und den SCR-Katalysator 6 in einem gemeinsamen Gehäuse 16 oder in separaten Gehäusen 16, 16' vorzusehen.

Ferner ist eine Kombination der in Figur 1 und 2 gezeigten Ausführungsformen denkbar, bei der das Partikelfilter 3 im Innenkanal 9 und der SCR-Katalysator 6 im separaten nachgeordneten Gehäuse 16' angeordnet ist. Ebenso ist auch eine umgekehrte Bauform denkbar, bei welcher der SCR-Katalysator 6 im Innenkanal 9 angeordnet ist, während das Partikelfilter 3 stromab davon außerhalb des Gehäuses 8 im separaten Gehäuse 16 angeordnet ist.

Bei der in Figur 3 gezeigten Ausführungsform ist der Gehäuseeinlass 14 am Innenkanal 9 ausgebildet, während sich der Gehäuseauslass 15 am Außenkanal 11 befindet. In diesem Fall ist der Injektor 4 am Innenkanal 9 angeordnet. Um dennoch stromauf des Mischer-Verdampfers 5 eindüsen zu können, ist hier der Mischer-Verdampfer 5 entfernt vom Einlassende des Innenkanals 9 angeordnet. Im Beispiel der Figur 3 ist das Partikelfilter 3 im Ringkanal 10 angeordnet. Der SCR-Katalysator kann analog zu Figur 2 in einem separaten SCR-Katalysatorgehäuse 16' oder im Außenkanal 11 angeordnet sein, was in Figur 3 mit unterbrochener Linie angedeutet ist. Grundsätzlich ist auch hier eine umgekehrte Anordnung für Partikelfilter 3 und SCR-Katalysator 6 denkbar, so dass der SCR-Katalysator 6 ringförmig ausgestaltet ist und im Ringkanal 10 angeordnet ist, während das Partikelfilter 3 dann entweder im nachfolgenden separaten Gehäuse 16 oder im Auslasskanal 11 angeordnet ist. In beiden Fällen ist dabei der Mischer-Verdampfer 5 stromauf des Partikelfilters 3 und stromauf des SCR-Katalysators 6 angeordnet. Bei einer alternativen Ausführungsform kann auch hier vorgesehen sein, die SCR-Katalysatorfunktion in das Partikelfilter 3 zu integrieren.

Bei der in Figur 3 gezeigten Ausführungsform ist außerdem vorgesehen, den Oxidationskatalysator 2 stromauf des Innenkanals 9 außerhalb des Gehäuses 8 in einem separaten Oxidatorgehäuse 17 unterzubringen, das an den Gehäuseeinlass 14 anschließt.

Bemerkenswert ist ferner, dass der Mischer-Verdampfer 5 bei allen Ausführungsformen strömungsmäßig zwischen dem Oxidationskatalysator 2 und dem Partikel-filter 3 angeordnet ist. Auch erfolgt die Injektion des Reduktionsmittels mit Hilfe des Injektors 4 strömungsmäßig zwischen dem Oxidationskatalysator 2 und dem Partikelfilter 3.

Der Außenkanal 11 und der Innenkanal 9 sind im gezeigten Beispiel parallel zueinander ausgerichtet. Grundsätzlich können bei anderen Ausführungsformen der Außenkanal 11 und der Innenkanal 9 quasi in jedem beliebigen Winkel zueinander geneigt sein. Ferner sind im gezeigten Beispiel der Gehäuseeinlass 14 und der Gehäuseauslass 15 so angeordnet, dass sich darin parallele Durchströmungsrichtungen 23, 24 das Abgas ausbilden. Insbesondere sind diese Durchströmungsrichtungen 23, 24 auch parallel zu einer Längsmittelachse 25 des Innenkanals 9. Die erste Umlenkkammer 12 bewirkt eine 180° Strömungsumlenkung zwischen dem Außenkanal 11 und dem Ringkanal 10. Die zweite Umlenkkammer 13 bewirkt ebenfalls eine 180° Strömungsumlenkung vom Ringkanal 10 zum Innenkanal 9.

Das Gehäuse 8 besitzt einen Topf 18, ein Innenrohr 19 und einen Topfdeckel 20. Das Innenrohr 19 ragt koaxial in den Topf 18 hinein. Radial zwischen dem Innenrohr 19 und dem Topf 18 ist dabei der Ringkanal 10 ausgebildet. Der Innenkanal 9 ist vom Innenrohr 19 umschlossen. Der Außenkanal 11 ist dagegen in einem separaten Außenrohr 21 untergebracht. Die erste Umlenkkammer 12 befindet sich dabei im Topfdeckel 20, der den Topf 18 mit dem Außenrohr 21 verbindet. Die zweite Umlenkkammer 13 befindet sich innerhalb des Topfs 18 im Bereich eines Topfbodens 22. Bei den Ausführungsformen der Figuren 1 und 2 ist der Injektor 4 am Topfboden 22 angeordnet.

## Patentansprüche

1. Abgasanlage einer Brennkraftmaschine,
- mit einem Oxidationskatalysator (2),
- mit einem Partikelfilter (3),
- mit einem Injektor (4) zum Eindüsen eines Reduktionsmittels,
- mit einem statischen Mischer-Verdampfer (5),
- mit einem SCR-Katalysator (6),
- mit einem Gehäuse (8), das einen zentrisch angeordneten Innenkanal (9), einen konzentrisch um den Innenkanal (9) angeordneten Ringkanal (10), einen exzentrisch angeordneten Außenkanal (11), eine den Außenkanal (11) mit dem Ringkanal (10) verbindende erste Umlenkkammer (12) und eine den Innenkanal (9) mit dem Ringkanal (10) verbindende zweite Umlenkkammer (13) aufweist,
- wobei der Oxidationskatalysator (2) stromauf des Partikelfilters (3) und stromauf des SCR-Katalysators (6) angeordnet ist,
- wobei der Injektor (4) stromauf des Mischer-Verdampfers (5) und der Mischer-Verdampfer (5) stromauf des SCR-Katalysators (6) angeordnet ist,
- wobei der Mischer-Verdampfer (5) im Innenkanal (9) angeordnet ist,
- wobei der Oxidationskatalysator (2) oder das Partikelfilter (3) oder der SCR-Katalysator (6) ringförmig ausgestaltet und im Ringkanal (10) angeordnet ist,
**dadurch gekennzeichnet,**
- **dass** ein Gehäuseeinlass (14) am Innenkanal (9) ausgebildet ist,
- **dass** der Injektor (4) am Innenkanal (9) angeordnet ist.

2. Abgasanlage nach Anspruch 1,
**dadurch gekennzeichnet,**
- **dass** das Partikelfilter (3) und/oder der SCR-Katalysator (6) im Ringkanal (10) angeordnet ist/sind,
- **dass** der Mischer-Verdampfer (5) stromauf des Partikelfilters (3) angeordnet ist,
- **dass** der Injektor (4) das Reduktionsmittel in den Innenkanal (9) eindüst.

3. Abgasanlage nach Anspruch 1 oder 2,
**dadurch gekennzeichnet,**
**dass**, wenn das Partikelfilter (3) oder der SCR-Katalysator (6) ringförmig ausgestaltet und im Ringkanal (10) angeordnet ist, der Oxidationskatalysator (2) stromauf des Innenkanals (9) außerhalb des Gehäuses (8) in einem separaten Gehäuse (17) angeordnet ist.

4. Abgasanlage nach einem der Ansprüche 1 bis 3,
**dadurch gekennzeichnet,**
**dass** der Mischer-Verdampfer (5) strömungsmäßig zwischen dem Oxidationskatalysator (2) und dem Partikelfilter (3) angeordnet ist.

5. Abgasanlage nach einem der Ansprüche 1 bis 4,
**dadurch gekennzeichnet,**
**dass** der Injektor (4) das Reduktionsmittel strömungsmäßig zwischen dem Oxidationskatalysator (2) und dem Partikelfilter (3) eindüst.

6. Abgasanlage nach einem der Ansprüche 1 bis 5,
**dadurch gekennzeichnet,**
**dass** in der ersten Umlenkkammer (12) eine Strömungsumlenkung um bis zu 180° erfolgt.

7. Abgasanlage nach einem der Ansprüche 1 bis 6,
**dadurch gekennzeichnet,**
**dass** in der zweiten Umlenkkammer (13) eine Strömungsumlenkung um bis zu 180° erfolgt.

8. Abgasanlage nach einem der Ansprüche 1 bis 7,
**dadurch gekennzeichnet,**
**dass** der Gehäuseeinlass (14) und ein Gehäuseauslass (15) parallele Durchströmungsrichtungen (23, 24) definieren.

9. Abgasanlage nach einem der Ansprüche 1 bis 8,
**dadurch gekennzeichnet,**
- **dass** der Ringkanal (10) radial zwischen einem Innenrohr (19) und einem Topf (18) verläuft, in den das Innenrohr (19) koaxial hineinragt,
- **dass** der Innenkanal (9) im Innenrohr (19) verläuft,
- **dass** der Außenkanal (11) in einem Außenrohr (21) verläuft, das außerhalb des Topfs (18) angeordnet ist.

10. Abgasanlage nach Anspruch 9,
**dadurch gekennzeichnet,**
- **dass** die erste Umlenkkammer (12) in einem Topfdeckel (20) angeordnet ist, der den Topf (18) mit dem Außenrohr (21) verbindet,
- **dass** die zweite Umlenkkammer (13) innerhalb des Topfs (18) im Bereich eines Topfbodens (22) angeordnet ist.

11. Abgasanlage nach einem der Ansprüche 1 bis 10,
**dadurch gekennzeichnet,**
**dass** das Partikelfilter (3) und der SCR-Katalysator (6) als separate Elemente ausgestaltet sind.

12. Abgasanlage nach einem der Ansprüche 2 bis 10,
**dadurch gekennzeichnet,**
**dass** der SCR-Katalysator (6) als katalytisch aktive Beschichtung in das Partikelfilter (3) integriert ist.

13. Abgasanlage nach einem der Ansprüche 1 bis 12,
**dadurch gekennzeichnet,**
**dass** der Mischer-Verdampfer (5) bezüglich des Partikelfilters (3) ein separates Bauteil ist.

## Claims

1. An exhaust system of an internal combustion engine,
- with an oxidation catalytic converter (2),
- with a particle filter (3),
- with an injector (4) for injecting a reduction agent,
- with a static mixer-evaporator (5),
- with an SCR catalytic converter (6),
- with a housing (8), which comprises a centrally arranged inner channel (9), an annular channel (10) concentrically arranged about the inner channel (9), an eccentrically arranged outer channel (11), a first deflection chamber (12) connecting the outer channel (11) to the annular channel (10) and a second deflection chamber (13) connecting the inner channel (9) to the annular channel (10),
- wherein the oxidation catalytic converter (2) is arranged upstream of the particle filter (3) and upstream of the SCR catalytic converter (6),
- wherein the injector (4) is arranged upstream of the mixer-evaporator (5) and the mixer-evaporator (5) upstream of the SCR catalytic converter (6),
- wherein the mixer-evaporator (5) is arranged in the inner channel (9),
- wherein the oxidation catalytic converter (2) or the particle filter (3) or the SCR catalytic converter (6) is configured annularly and arranged in the annular channel (10),
**characterized**
- **in that** a housing inlet (14) is formed on the inner channel (9),
- **in that** the injector (4) is arranged on the inner channel (9).

2. The exhaust system according to Claim 1, **characterized**
- **in that** the particle filter (3) and/or the SCR catalytic converter (6) is/are arranged in the annular channel (10),
- **in that** the mixer-evaporator (5) is arranged upstream of the particle filter (3),
- **in that** the injector (4) injects the reduction agent into the inner channel (9).

3. The exhaust system according to Claim 1 or 2, **characterized in that** the oxidation catalytic converter (2) is arranged in a separate housing (17) upstream of the inner channel (9) outside the housing (8).

4. The exhaust system according to any one of the Claims 1 to 3, **characterized in that** the mixer-evaporator (5) with respect to flow is arranged between the oxidation catalytic converter (2) and the particle filter (3).

5. The exhaust system according to any one of the Claims 1 to 4, **characterized in that** the injector (4) with respect to flow injects the reduction agent between the oxidation catalytic converter (2) and the particle filter (3).

6. The exhaust system according to any one of the Claims 1 to 5, **characterized in that** in the first deflection chamber (12) a flow deflection by up to 180° takes place.

7. The exhaust system according to any one of the Claims 1 to 6, **characterized in that** in the second deflection chamber (13) a flow deflection by up to 180° takes place.

8. The exhaust system according to any one of the Claims 1 to 7, **characterized in that** a housing inlet (14) and a housing outlet (15) define parallel directions of flow (23, 24).

9. The exhaust system according to any one of the Claims 1 to 8, **characterized**
- **in that** the annular channel (9) runs radially between an inner pipe (19) and a silencer (18), into which the inner pipe (19) coaxially projects,
- **in that** the inner channel (9) runs in the inner pipe (19),
- **in that** the outer channel (11) runs in an outer pipe (21), which is arranged outside the silencer (18).

10. The exhaust system according to Claim 9, **characterized**
- **in that** the first deflection chamber (12) is arranged in a silencer lid (20), which connects the silencer (18) to the outer pipe (21),
- **in that** the second deflection chamber (13) is arranged within the silencer (18) in the region of a silencer bottom (22).

11. The exhaust system according to any one of the claims 1 to 10, **characterized in that** the particle filter (3) and the SCR catalytic converter (6) are provided as separate elements.

12. The exhaust system according to any one of the claims 1 to 10, **characterized in that** the SCR catalytic converter (6) is integrated into the particle filter (3) as a catalytic active coating.

13. The exhaust system according to any one of the claims 1 to 12, **characterized in that** the mixer-evaporator (5) is a separate part with respect to the particle filter (3).

## Revendications

1. Installation de gaz d'échappement d'un moteur à combustion interne,
- comprenant un catalyseur à oxydation (2),
- comprenant un filtre à particules (3),
- comprenant un injecteur (4) servant à introduire par injection un agent de réduction,
- comprenant un mélangeur-évaporateur (5) statique,
- comprenant un catalyseur de type SCR (à réduction catalytique sélective) (6),
- comprenant un carter (8), qui présente un canal intérieur (9) disposé au centre, un canal annulaire (10) disposé de manière concentrique autour du canal intérieur (9), un canal extérieur (11) disposé de manière excentrique, une première enceinte de déviation (12) reliant le canal extérieur (11) au canal annulaire (10) et une deuxième enceinte de déviation (13) reliant le canal intérieur (9) au canal annulaire (10),
- le catalyseur à oxydation (2) étant disposé en amont du filtre à particules (3) et en amont du catalyseur de type SCR (6),
- l'injecteur (4) étant disposé en amont du mélangeur-évaporateur (5) et le mélangeur-évaporateur (5) étant disposé en amont du catalyseur de type SCR (6),
- le mélangeur-évaporateur (5) étant disposé dans le canal intérieur (9),
- le catalyseur à oxydation (2) et le filtre à particules (3) ou le catalyseur de type SCR (6) étant configuré de manière à présenter une forme annulaire et étant disposé dans le canal annulaire (10),
**caractérisée en ce**
- **qu'**une entrée de carter (14) est réalisée au niveau du canal intérieur (9),
- en ce que l'injecteur (4) est disposé au niveau du canal intérieur (9).

2. Installation de gaz d'échappement selon la revendication 1,
**caractérisée en ce**
- **que** le filtre à particules (3) et/ou le catalyseur de type SCR (6) sont disposés dans le canal annulaire (10),
- en ce que le mélangeur-évaporateur (5) est disposé en amont du filtre à particules (3),
- en ce que l'injecteur (4) introduit par injection l'agent de réduction dans le canal intérieur (9).

3. Installation de gaz d'échappement selon la revendication 1 ou 2,
caractérisée en
que lorsque le filtre à particules (3) ou le catalyseur de type SCR (6) est configuré de manière à présenter une forme annulaire et est disposé dans le canal annulaire (10), le catalyseur à oxydation (2) est disposé en amont du canal intérieur (9) à l'extérieur du carter (8) dans un carter (17) séparé.

4. Installation de gaz d'échappement selon l'une quelconque des revendications 1 à 3,
**caractérisée en ce**
**que** le mélangeur-évaporateur (5) est disposé selon l'écoulement entre le catalyseur à oxydation (2) et le filtre à particules (3).

5. Installation de gaz d'échappement selon l'une quelconque des revendications 1 à 4,
**caractérisée en ce**
**que** l'injecteur (4) introduit par injection l'agent de réduction, selon une communication fluidique, entre le catalyseur à oxydation (2) et le filtre à particules (3).

6. Installation de gaz d'échappement selon l'une quelconque des revendications 1 à 5,
**caractérisée en ce**
**qu'**une déviation d'écoulement allant jusqu'à 180° a lieu dans la première enceinte de déviation (12).

7. Installation de gaz d'échappement selon l'une quelconque des revendications 1 à 6,
**caractérisée en ce**
**qu'**une déviation d'écoulement allant jusqu'à 180° a lieu dans la deuxième enceinte de déviation (13).

8. Installation de gaz d'échappement selon l'une quelconque des revendications 1 à 7,
**caractérisée en ce**
**que** l'entrée de carter (14) et une sortie de carter (15) définissent des directions d'écoulement de passage (23, 24) parallèles.

9. Installation de gaz d'échappement selon l'une quelconque des revendications 1 à 8,
**caractérisée en ce**
- **que** le canal annulaire (10) s'étend de manière radiale entre un tuyau intérieur (19) et un creuset (18), à l'intérieur duquel le tuyau intérieur (19) dépasse de manière coaxiale,
- en ce que le canal intérieur (9) s'étend dans le tuyau intérieur (19),
- en ce que le canal extérieur (11) s'étend dans le tuyau extérieur (21), qui est disposé à l'extérieur du creuset (18).

10. Installation de gaz d'échappement selon la revendication 9,
**caractérisée en ce**
- **que** la première enceinte de déviation (12) est disposée dans un couvercle de creuset (20), qui relie le creuset (18) au tuyau extérieur (21),
- en ce que la deuxième enceinte de déviation (13) est disposée à l'intérieur du creuset (18) dans la zone d'un fond de creuset (22).

11. Installation de gaz d'échappement selon l'une quelconque des revendications 1 à 10,
**caractérisée en ce**
**que** le filtre à particules (3) et le catalyseur de type SCR (6) sont configurés sous la forme d'éléments séparés.

12. Installation de gaz d'échappement selon l'une quelconque des revendications 2 à 10,
**caractérisée en ce**
**que** le catalyseur de type SCR (6) est intégré dans le filtre à particules (3) sous la forme d'un revêtement catalytiquement actif.

13. Installation de gaz d'échappement selon l'une quelconque des revendications 1 à 12,
**caractérisée en ce**
**que** le mélangeur-évaporateur (5) est un composant séparé par rapport au filtre à particules (3).
